(19) Europäisches Patentamt / European Patent Office / Office européen des brevets

(11) **EP 1 521 352 B1**

(12) **FASCICULE DE BREVET EUROPEEN**

(45) Date de publication et mention
de la délivrance du brevet:
**05.08.2009 Bulletin 2009/32**

(51) Int Cl.:
***H02K 33/16*** (2006.01)

(21) Numéro de dépôt: **04292260.9**

(22) Date de dépôt: **21.09.2004**

(54) **Dispositif actif d'amortissement de vibrations d'un element vibrant**

Aktive Schwingungsdämpfungsvorrichtung eines Schwingungselementes

Active vibration dampening device of a vibrating element

(84) Etats contractants désignés:
**DE ES IT**

(30) Priorité: **01.10.2003 FR 0311495**

(43) Date de publication de la demande:
**06.04.2005 Bulletin 2005/14**

(73) Titulaire: **HUTCHINSON**
**75008 Paris (FR)**

(72) Inventeurs:
• **Loubat, Patrice**
**28220 La Ferte Villeneuil (FR)**

• **Joly, Jérôme**
**28200 Chateaudun (FR)**

(74) Mandataire: **Burbaud, Eric**
**Cabinet Plasseraud**
**52 rue de la Victoire**
**75440 Paris Cedex 09 (FR)**

(56) Documents cités:
**US-A- 5 231 336      US-A- 5 427 362**
**US-A- 5 718 418**

**Description**

La présente invention concerne le domaine des dispositifs actifs d'amortissement de vibrations d'un élément vibrant, pour véhicule automobile, encore appelés batteurs actifs.

Plus particulièrement, l'invention est relative à de tels dispositifs qui comprennent un actionneur, lequel actionneur comporte

- une bobine s'étendant circulairement dans un plan, autour d'un axe de déplacement, associée à une carcasse magnétiquement perméable, coulissant dans un mouvement alternatif selon l'axe de déplacement perpendiculaire au plan de la bobine, un courant électrique variable parcourant la bobine et générer un champ magnétique,

- et une armature magnétiquement perméable, liée à l'élément vibrant dont on souhaite réduire les vibrations, par action de forces de réaction sur l'armature.

Un dispositif actif de ce type est décrit par exemple dans le document EP 0 574 574 B1.

Les dispositifs connus de ce type utilisent généralement un aimant permanent. Or les aimants permanents sont fragiles et sensibles à la température. Leur action va donc être affectée par des variations de température, fréquentes à proximité d'un moteur automobile. De plus, le coût de ces aimants est important en raison des matières rares utilisées et du procédé de fabrication de ces aimants.

La présente invention a notamment pour but de pallier ces inconvénients.

A cet effet, selon l'invention, un dispositif du genre en question est principalement caractérisé en ce que le déplacement de la bobine par rapport à l'armature est engendré par des forces correspondant à des lignes du champ magnétique généré par la bobine, concentrées dans l'armature et la carcasse et dirigées essentiellement dans un entrefer situé entre l'armature et la carcasse. Une définition précise de l'invention est donnée dans la revendication 1.

Grâce à ces dispositions, le flux magnétique dans l'entrefer, généré par le courant électrique dans la bobine est à l'origine du déplacement de la bobine et de la carcasse par rapport à l'armature, sans avoir recours à des aimants. Ce type de batteur actif permet également des débattements importants, bien adaptés à une utilisation d'amortissement des vibrations d'un moteur de véhicule. En outre, le dispositif selon l'invention est pratiquement insensible aux variations de températures.

Dans des modes de réalisation du dispositif selon l'invention, celui-ci comporte l'une et/ou l'autre des dispositions suivantes:

- l'entrefer consiste en un espace radial, par rapport à l'axe de déplacement, entre l'armature et la carcasse;

- la bobine est centrée sur l'axe de déplacement et la carcasse comporte une cavité annulaire dans laquelle est logée la bobine; cette cavité annulaire comporte elle-même une paroi latérale s'étendant, à l'intérieur de la bobine, sensiblement parallèlement à l'axe de déplacement;

- une partie de la paroi latérale présente une forme sensiblement conique centrée sur l'axe de déplacement, tandis que l'entrefer correspondant à cette partie est sensiblement constant ; cette forme conique permet de créer un phénomène de saturation magnétique du matériau, et ainsi d'avoir une caractéristique quasi-linéaire de force magnétique Fmag en fonction du courant et du déplacement dans la zone d'utilisation;

- la carcasse comprend un circuit magnétique inférieur et un circuit magnétique supérieur, chacun sensiblement en forme de gorge, et ces gorges sont ouvertes l'une vers l'autre pour former la cavité annulaire de la carcasse;

- les circuits magnétiques inférieur et supérieur sont constitués des deux mêmes circuits magnétiques, disposés l'un sur l'autre sensiblement symétriquement par rapport au plan de la bobine; ainsi les modalités de réalisation de la carcasse sont très simples et les pièces la constituant sont en nombre réduit;

- les circuits magnétiques inférieur et supérieur comportent chacun respectivement un rebord s'étendant radialement vers l'extérieur et adapté pour être emmanché en force avec l'autre rebord;

- les circuits magnétiques inférieur et supérieur comportent chacun respectivement un rebord s'étendant radialement vers l'extérieur et adapté pour être emmanché en force sur un anneau périphérique;

- les circuits magnétiques inférieur et supérieur sont maintenus ensemble grâce à une bague de sertissage;

- l'armature comporte un noyau central magnétiquement perméable qui s'étend selon l'axe de déplacement, au centre de la bobine;

- la carcasse comprend une base s'étendant au-dessus du noyau central selon un plan perpendiculaire à l'axe de déplacement, le noyau central et la base étant séparés par un entrefer axial;

- des moyens de suspension sont adaptés pour solliciter la carcasse et la bobine en contre réaction de la force exercée par le champ magnétique selon l'axe de déplacement;

- les moyens de suspension sont des ressorts métalliques ou des ressorts en caoutchouc;

- des bagues de guidage sont fixées à la carcasse ou à l'armature, elles sont adaptées pour guider le déplacement de la bobine, elles coulissent le long du noyau central;

- la bobine est au moins partiellement enchâssée dans un matériau plastique utilisé pour le bobinage du fil comportant éventuellement des reliefs adaptés pour exercer une précontrainte sur la bobine, lorsque celle-ci est logée dans la carcasse, pour limiter les mouvements de la bobine dans la carcasse;

- un palier de guidage prolonge l'armature selon l'axe de déplacement, il est adapté pour coopérer avec la carcasse et guider le déplacement le long de l'axe de déplacement, de l'ensemble mobile constitué de la bobine et de la carcasse;
- le palier de guidage a un diamètre inférieur à celui de l'armature.

D'autres caractéristiques et avantages de l'invention apparaîtront encore à la lecture de la description qui va suivre. Celle-ci est purement illustrative et doit être lue en regard des dessins annexés sur lesquels :

- la figure 1 représente schématiquement en coupe radiale un premier mode de réalisation du dispositif selon l'invention ;
- la figure 2 représente schématiquement en coupe radiale un second mode de réalisation du dispositif selon l'invention ;
- la figure 3 représente schématiquement en coupe radiale un troisième mode de réalisation du dispositif selon l'invention ;
- la figure 4 représente schématiquement en coupe radiale un quatrième mode de réalisation du dispositif selon l'invention ;
- la figure 5 représente schématiquement en coupe radiale un cinquième mode de réalisation du dispositif selon l'invention ;
- la figure 6 représente schématiquement en coupe radiale un sixième mode de réalisation du dispositif selon l'invention ;
- la figure 7 représente schématiquement en coupe radiale un septième mode de réalisation du dispositif selon l'invention ;
- la figure 8 représente schématiquement en coupe radiale un huitième mode de réalisation du dispositif selon l'invention ;
- la figure 9 représente un modèle simplifié linéaire de batteur actif ;
- la figure 10a représente, pour différentes valeurs de courant, la force magnétique Fmag en fonction de l'entrefer axial $e_a$ ;
- la figure 10b représente la force magnétique Fmag en fonction du courant I ;
- la figure 11 représente la réponse de l'effort Ft en fonction de la fréquence f.

Huit exemples de modes de réalisation du dispositif selon l'invention sont décrits ci-dessous.

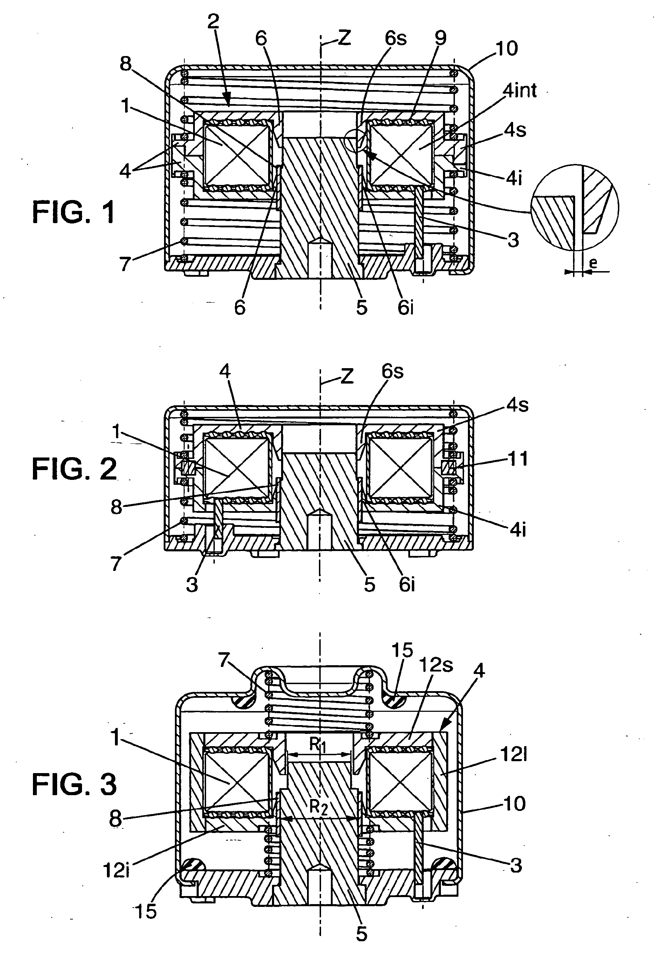

Selon le premier mode de réalisation illustré sur la figure 1, le dispositif comporte un actionneur 2. L'actionneur 2 comprend une bobine 1 qui s'étend circulairement autour d'un axe de déplacement Z. La bobine 1 est connectée par l'intermédiaire de moyens de connexion 3 électriquement à des moyens d'alimentation et pilotage (non représentés) permettant la délivrance d'un courant électrique, et le pilotage du dispositif selon l'invention.

L'actionneur 2 comprend une carcasse 4 magnétiquement perméable solidarisée avec la bobine 1. La carcasse 4 forme une cavité annulaire 4int s'étendant circulairement autour de l'axe de déplacement Z. La bobine 1 est logée dans cette cavité annulaire 4int.

La carcasse 4 comporte une paroi latérale 6 s'étendant sensiblement parallèlement à l'axe de déplacement Z, à l'intérieur de la bobine 1. Cette paroi latérale 6 se trouve en regard d'une armature 5 magnétiquement perméable. Au moins en certaines parties suivant l'axe de déplacement Z, la paroi 6 est séparée de l'armature 5 par un entrefer radial e.

L'armature 5 est ici de forme sensiblement cylindrique. Elle est constituée, dans le mode de réalisation de la figure 1, d'un noyau central s'étendant le long de l'axe de déplacement Z et centré par rapport à cet axe de déplacement Z. Cette armature 5 centrale est destinée à être reliée, directement ou indirectement, à l'élément vibrant dont on souhaite réduire les vibrations.

Sous l'effet du champ magnétique généré par un courant électrique variable appliqué via les moyens de connexion 3 et parcourant la bobine 1, celle-ci et la carcasse 4 l'enserrant coulissent dans un mouvement alternatif selon l'axe de déplacement Z.

Les lignes du champ magnétique sont concentrées dans l'armature 5 et la carcasse 4 et ces dernières sont concentrées dans l'entrefer e. Cet entrefer e est invariant lors du déplacement de la bobine. Le déplacement de la carcasse 4 et de la bobine 1 est essentiellement engendré par des forces dues aux variations de reluctance du circuit magnétique.

Par action de forces de réaction sur l'armature 5 liées au déplacement de la bobine 1 associée à la carcasse 4, des efforts sont générés dans l'armature 5. Ceux-ci produisent des contre-vibrations. Ces contre-vibrations générées par le dispositif selon l'invention sont adaptées pour amortir les vibrations de l'élément vibrant.

Dans le mode de réalisation représenté en figure 1, la paroi latérale 6 comporte deux parties respectivement supérieure 6s et inférieure 6i. Chaque partie supérieure 6s ou inférieure 6i présente une largeur transversale décroissante en direction de l'autre partie 6i ou 6s de la paroi latérale 6. Ces parties 6s et 6i appartiennent respectivement à deux circuits magnétiques 4s et 4i, chacun sensiblement en forme de gorge et comportant un rebord s'étendant radialement vers l'extérieur, symétriques (un usinage sur une des deux pièces permet éventuellement de les différencier) qui s'emboîtent par conformage, constituant ainsi la cavité annulaire intérieure 4int de la carcasse 4. Ils peuvent par exemple être emmanchés l'un dans l'autre en force.

Le dispositif selon l'invention comporte en outre des bagues de guidage 8 fixées ici sur la paroi latérale inférieure 6i de la carcasse 4.

La partie supérieure 6s de la paroi 6 est séparée de l'armature 5 par l'entrefer e.

L'espacement entre l'armature 5 et la partie inférieure 6i est ici occupé par les bagues de guidage.

Le dispositif selon l'invention représenté en figure 1 comporte des moyens de suspension 7 comprenant des ressorts métalliques ou en caoutchouc disposés sur la bobine 1 (ou la carcasse 4 associée) pour la solliciter en contre réaction de la force Fmag s'exerçant entre la carcasse 4 et l'armature 5. Ce type de suspension offre une bonne résistance aux contraintes subies et permet de grands débattements nécessaires pour des battements par exemple à basse fréquence (f entre 15 et 50 Hz). Elles sont donc utilisées avantageusement, plutôt que des suspensions à lames métalliques ou composites.

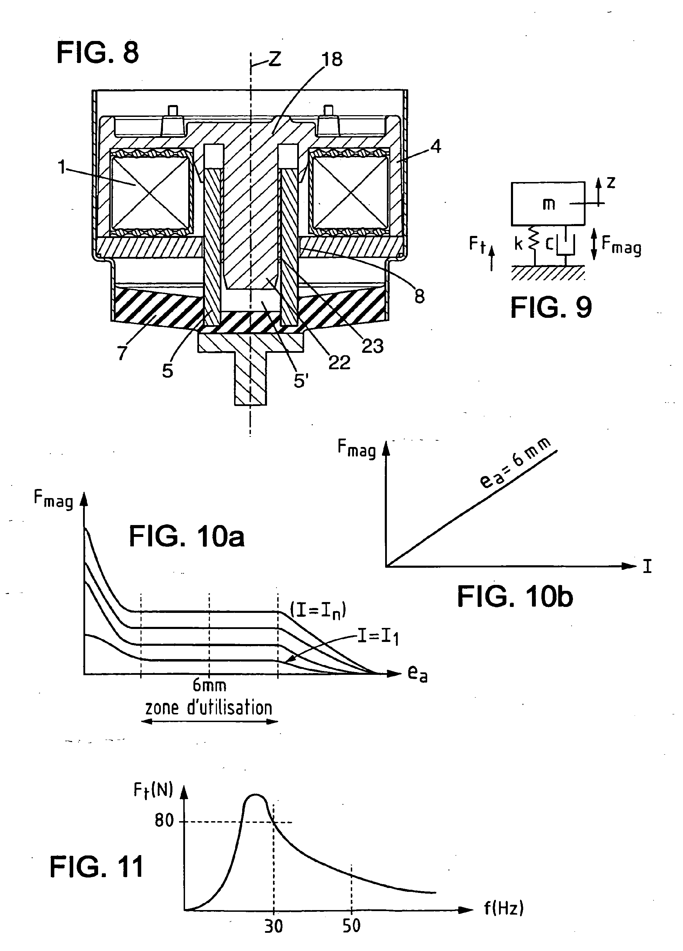

En figure 9 est représenté un modèle simplifié linéaire d'un batteur actif utilisant une force magnétique Fmag afin de transmettre une force Ft à l'élément vibrant à une fréquence f, avec un débattement z, à l'aide d'une suspension (k représentant la constante de raideur du batteur, et c représentant le coefficient d'amortissement de ce batteur) permettant à la résonance une amplification du débattement de la masse m en suspension. Les équations régissant ce batteur sont :

$$Ft = kz + c\dot{z} - Fmag$$

$$m\ddot{z} = -kz - c\dot{z} + Fmag$$

En figure 11 est représentée la réponse de l'effort Ft en fonction de la fréquence f. Cette force dépend en outre du courant. Par un choix judicieux des différents paramètres (à titre illustratif, m=1,1 kg, c=40 Ns/m, k=22000 N/m et Fmag=40 N), on constate que ce batteur peut transmettre, à l'élément vibrant, un effort important (supérieur à 80 N) pour des fréquences sensiblement inférieures à 30Hz.

L'ensemble est recouvert d'un élément de sertissage extérieur 10 qui permet de mettre une précontrainte sur les ressorts de telle sorte qu'ils travaillent toujours en compression.

On notera que la position moyenne de l'armature centrale 5 est non centrée selon l'axe Z par rapport aux deux parties 6s et 6i de la carcasse 4, ce qui permet de produire l'effort.

Dans d'autres modes de réalisation, l'armature peut être disposée de façon à entourer la bobine et la carcasse.

Les matériaux utilisés sont de préférence standards et peu coûteux. Ainsi, on peut utiliser comme matériau magnétiquement perméable de l'acier magnétique faiblement allié, par exemple du fer doux à faible taux de carbone (XC48, XC42) pour qu'il y ait peu de rémanence, ou encore un alliage fer-silicium ou fer-nickel. Les pièces 6s et 6i de la carcasse ont sensiblement une forme cylindrique de révolution, par conséquent aisée à réaliser. Elles pourraient être obtenues par exemple par moulage d'un acier magnétique, ou par une compression importante à chaud d'un mélange de poudre de fer-résine ayant des caractéristiques magnétiques, ou par usinage à grande vitesse, etc.

On peut utiliser du cuivre pour la bobine.

Le pilotage du dispositif selon l'invention via les moyens de connexion 3 peut être effectué soit en boucle ouverte, à l'aide de la seule information "top tour moteur", soit adapté de temps en temps à l'aide d'informations, de vibration et/ou de bruit, provenant d'un outil électronique par exemple délivré par le constructeur automobile.

Avantageusement, la bobine est recouverte, sur les faces extérieures destinées à être mises en contact avec la carcasse 4, d'un matériau plastique muni de picots 9 s'écrasant lorsque l'on solidarise la bobine et la carcasse 4, par exemple par sertissage. Cette précontrainte de la bobine 1 permet, lorsque le courant est appliqué, que ce soit l'ensemble comprenant la bobine 1 et la carcasse 4 qui vibre.

Les références sur les figures 2 à 8 suivantes portant les mêmes numéros que des références de la figure 1, désignent des éléments similaires. Pour chacune des figures 2 à 8, seules sont décrites ci-dessous les principales caractéristiques la différenciant des figures décrites précédemment.

Dans le deuxième mode de réalisation, représenté en figure 2, les parties respectivement supérieure 6s et inférieure 6i de la carcasse 4 sont fixées l'une avec l'autre à l'aide de pions ou d'anneaux 11.

Dans le troisième mode de réalisation, représenté en figure 3, la carcasse 4 n'est plus constituée de pièces symétriques du type représenté en figures 1 et 2, mais comprend trois parties différentes assemblées, respectivement inférieure 12i, supérieure 12s et latérale 121.

L'armature 5 est constituée de deux parties sensiblement cylindriques de diamètre R1 et R2, telles que la partie supérieure 12s de la carcasse 4 coulisse le long de la partie de diamètre R1 de l'armature 5 et que la partie inférieure 12i de la carcasse 4 coulisse le long de la partie de diamètre R2 de l'armature 5.

L'élément de sertissage extérieur 10 comporte en outre des butées en caoutchouc 15 disposées en direction de l'ensemble constitué de la bobine 1 et de l'armature 5, afin d'amortir les débattements en fin de course avant le contact avec l'élément de sertissage 10, avant contact entre les spires des ressorts métalliques, quand des ressorts métalliques sont utilisés pour réaliser la suspension.

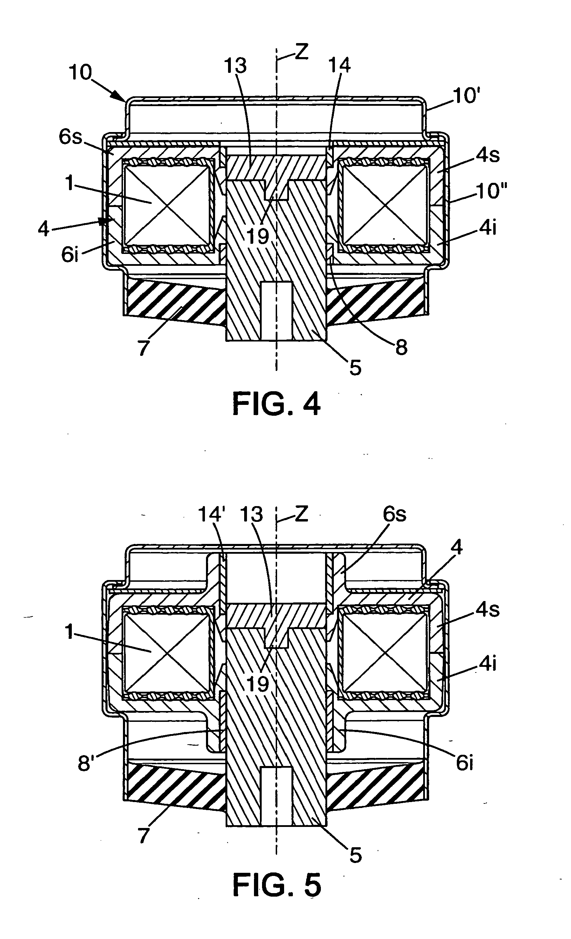

Dans le quatrième mode de réalisation représenté en figure 4, l'armature 5 est surmontée d'une pièce de guidage 13 de même diamètre que l'armature 5, en matériau non magnétique. Les parties supérieure 6s et inférieure 6i de la carcasse 4 sont équipées de bagues de guidage 14, adaptées pour guider le déplacement le long de l'axe de déplacement Z de la bobine 1 en la carcasse 4, sur l'armature 5 prolongée de la pièce de guidage 13.

L'assemblage de l'armature 5 et de la pièce 13 peut par exemple être réalisé par emmanchement, l'armature 5 présentant un alésage 19 centré sur l'axe Z dans lequel une partie de la pièce 13 vient s'emboîter serrée.

L'élément de sertissage extérieur 10 présente une forme adaptée pour sertir de façon serrée l'ensemble constitué de la bobine 1 et de la carcasse 4, en maintenant ainsi assemblées les parties inférieures 4i et 4s de la carcasse 4. L'élément de sertissage 10 est constitué d'une partie supérieure 10' et d'une partie inférieure 10''. La partie inférieure 10'' décrit deux coudes à l'intérieur desquels elle enserre la bobine 1. La partie supérieure 10' joue le rôle de couvercle de l'élément de sertissage 10 et décrit également un coude, respectivement bloqué entre un coude de la partie inférieure 10'' et la bobine. Dans ce mode de réalisation (et les suivants décrits ci-dessous), c'est donc l'ensemble constitué de l'élément de sertissage 10, de la bobine 1 et de la carcasse 4, qui se déplace selon l'axe de déplacement Z.

Dans ce mode de réalisation et ceux décrits ci-dessous, les moyens de suspension 7 sont constitués de caoutchouc adhérisé sur l'armature 5 et la paroi intérieure de l'élément de sertissage 10. Les moyens de suspension permettent un débattement de l'ensemble bobine 1-carcasse 4 par rapport à l'armature 5, en même temps qu'ils amortissent ce débattement et rappellent élastiquement la bobine 1 en position d'équilibre par rapport à l'armature 5.

Dans le cinquième mode de réalisation représenté en figure 5, les parties supérieure et inférieure 4s et 4i de la carcasse 4 sont munies d'épaulements 8' et 14' s'étendant selon l'axe de déplacement Z pour assurer un meilleur guidage de l'ensemble constitué de la bobine 1 et de la carcasse 4, sur l'armature 5.

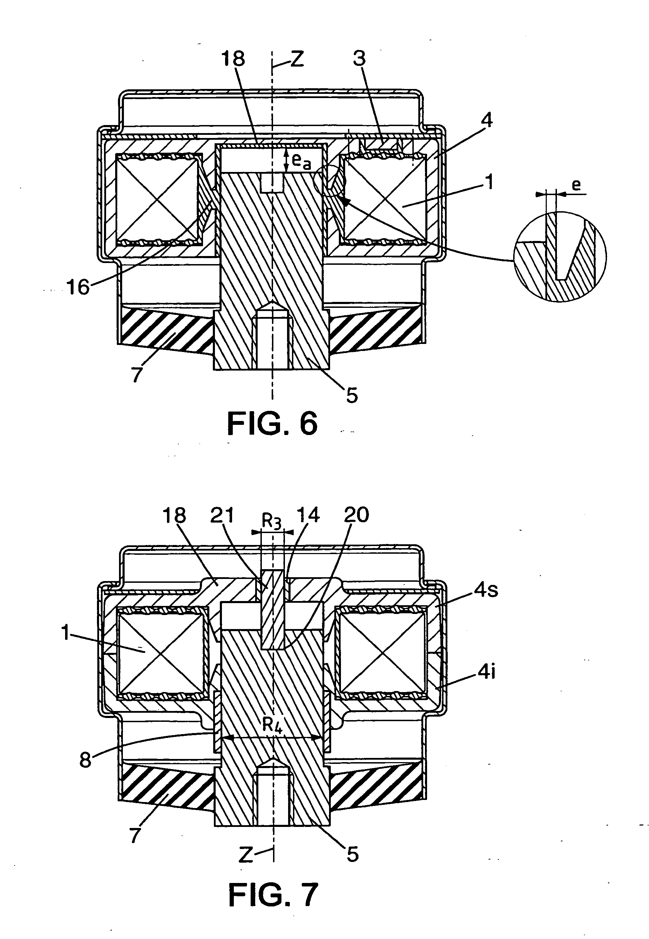

Dans le sixième mode de réalisation, représenté en figure 6, figure un palier de guidage 16 qui peut être réalisé seul ou éventuellement en complément des paliers de guidage décrits dans les représentations précédentes.

Ce palier de guidage 16 est constitué par une pièce en matière plastique faisant partie de la partie en plastique de la bobine 1 autour de laquelle est réalisé l'enroulement. Il vient quasiment en contact de l'armature 5, entre les parties inférieure 6i et supérieure 6s et s'étend le long de l'armature 5 selon l'axe Z. Cette pièce en plastique sert donc de palier de guidage; la partie en plastique dont elle est élément sert de support au bobinage et l'ensemble peut constituer par exemple un moule pour mouler la carcasse 4 à partir de poudre métallique.

De plus, la carcasse 4 comprend une base 18 en matériau magnétiquement perméable s'étendant au-dessus de l'armature 5 selon un plan perpendiculaire à l'axe de déplacement Z. Le dispositif selon l'invention représenté en figure 6 présente ainsi un entrefer axial $e_a$, qui varie en fonction du déplacement de la bobine 1, et un entrefer e comme précédemment, mais ici constitué de l'épaisseur de la paroi en plastique de cette pièce 16.

En figure 10a figure un réseau de courbes représentant la force magnétique Fmag en fonction de l'entrefer axial $e_a$, pour différentes valeurs croissantes de courant $I_1, ...I_n$.

Dans une zone dite d'utilisation correspondant à un intervalle de valeurs prises par l'entrefer axial $e_a$, les valeurs de Fmag en fonction du courant F, pour un entrefer $e_a$ fixé, sont sensiblement linéaires, comme par exemple représenté en figure 10b, pour une valeur de $e_a$ fixée à 6 mm.

Dans le septième mode de réalisation, représenté en figure 7, la carcasse 4 est équipée de deux bagues de guidage 8 et 14 de diamètre respectivement R3 et R4, supérieur à R3. La bague de guidage 14, de diamètre R3, équipe la paroi interne d'un passage ménagé dans la base 18.

L'armature 5 présente une cavité 20 sur sa partie supérieure centrée par rapport à l'axe de déplacement Z. Une tige centrale ou palier de guidage 21 en matériau magnétique ou non magnétique et sensiblement cylindrique est encastré(e) dans la cavité 20. Ce palier de guidage 21 présente un diamètre adapté pour guider en coopérant avec la bague de guidage 14, la bobine 1 lors de son déplacement selon l'axe Z.

Dans un autre mode de réalisation, le palier de guidage 21 et l'armature 5 peuvent être réalisés d'une seule pièce, lorsque le matériau utilisé est le même pour les deux éléments.

Dans le huitième mode de réalisation, représenté en figure 8, l'armature 5 est évidée sur sensiblement toute sa longueur selon l'axe Z et présente un logement, par exemple sensiblement cylindrique 5'. La base 18 est pourvue, en regard du logement 5' de l'armature, d'un élément cylindrique 22 de dimensions adaptées pour coulisser dans le logement 5' le long d'un palier de guidage 23 cylindrique situé entre l'armature 5 et l'élément cylindrique 22. Selon le mode de réalisation, ce palier de guidage est solidaire de l'armature 5 ou de l'élément cylindrique 22.

Le dispositif actif d'amortissement de vibrations selon l'invention présente une bonne efficacité. En effet, la force développée par un tel dispositif est fonction de la masse mobile et du débattement. Or la technologie d'actionneur, le guidage par des paliers et la suspension permettent de grands débattements. Et la masse mobile du dispositif selon l'invention, du fait qu'elle comporte la bobine 1 et la carcasse 4 en particulier, peut représenter plus de 80% de sa masse totale. Les deux paramètres utiles cités sont donc optimisés dans le dispositif selon l'invention.

**Revendications**

1. Dispositif actif d'amortissement de vibrations d'un élément vibrant, pour véhicule automobile, comprenant un actionneur (2) comportant

   - une bobine (1), s'étendant circulairement dans un plan, autour d'un axe de déplacement (Z), associée à une carcasse magnétiquement perméable (4), coulissant dans un mouvement alternatif selon l'axe de déplacement perpendiculaire au plan de la bobine, un courant électrique variable parcourant la bobine pour générer un champ magnétique,
   - et une armature magnétiquement perméable (5), liée à l'élément vibrant dont on souhaite amortir les vibrations, par action de forces de réaction sur l'armature,

   **caractérisé par le fait que** le déplacement de la bobine (1) par rapport à l'armature (5) est engendré par des forces correspondant à des lignes du champ magnétique généré par la bobine (1), la carcasse magnétiquement perméable (4) comportant une paroi latérale (6) s'étendant, à l'intérieur de la bobine (1), sensiblement parallèlement à l'axe de déplacement (Z) par quoi lesdites lignes du champ magnétique sont concentrées dans l'armature (5) et la carcasse (4) et dirigées essentiellement dans un entrefer (e) situé entre l'armature (5) et la carcasse (4).

2. Dispositif selon la revendication 1, dans lequel l'entrefer (e) consiste en un espace radial, par rapport à l'axe de déplacement (Z), entre l'armature (5) et la carcasse (4).

3. Dispositif selon l'une des revendications précédentes, dans lequel la bobine (1) est centrée sur l'axe de déplacement (Z) et la carcasse (4) comporte une cavité annulaire (4int) dans laquelle est logée la bobine, cette cavité annulaire comportant elle-même la paroi latérale (6) s'étendant, à l'intérieur de la bobine, sensiblement parallèlement à l'axe de déplacement (Z).

4. Dispositif selon la revendication 3, dans lequel une partie (6s;6i) de la paroi latérale (6) présente une forme sensiblement conique centrée sur l'axe de déplacement (Z), tandis que l'entrefer (e) correspondant à cette partie est sensiblement constant.

5. Dispositif selon la revendication 3 ou la revendication 4, dans lequel la carcasse (4) comprend un circuit magnétique inférieur (4i) et un circuit magnétique supérieur (4s), chacun sensiblement en forme de gorge, ces gorges étant ouvertes l'une vers l'autre sensiblement pour former la cavité annulaire de la carcasse (4int).

6. Dispositif selon la revendication 5, dans lequel les circuits magnétiques inférieur (4i) et supérieur (4s) sont constitués des deux mêmes circuits magnétiques, disposés l'un sur l'autre symétriquement par rapport au plan de la bobine.

7. Dispositif selon la revendication 5, dans lequel les circuits magnétiques inférieur (4i) et supérieur (4s) comportent chacun respectivement un rebord s'étendant radialement vers l'extérieur et adapté pour être emmanché en force avec l'autre rebord.

8. Dispositif selon la revendication 6, dans lequel les circuits magnétiques inférieur (4i) et supérieur (4s) comportent chacun respectivement un rebord s'étendant radialement vers l'extérieur et adapté pour être emmanché en force sur un anneau périphérique (11).

9. Dispositif selon l'une quelconque des revendications 5 à 8, dans lequel les circuits magnétiques inférieur (4i) et supérieur (4s) sont maintenus ensemble grâce à une bague de sertissage (10).

10. Dispositif selon l'une quelconque des revendications précédentes, dans lequel l'armature (5) comporte un noyau central magnétiquement perméable qui s'étend selon l'axe de déplacement (Z), au centre de la bobine (1).

11. Dispositif selon la revendication 10, dans laquelle la carcasse (4) comprend une base (18) s'étendant au-dessus du noyau central selon un plan perpendiculaire à l'axe de déplacement, le noyau central et la base étant séparés par un entrefer axial (ea).

12. Dispositif selon l'une quelconque des revendications précédentes comportant des moyens de suspension (7), adaptés pour solliciter la carcasse (4) et la bobine (1) en contre réaction de la force exercée par le champ magnétique selon l'axe de déplacement (Z).

13. Dispositif selon la revendication 12, dans lequel les moyens de suspension (7) sont des ressorts métalliques ou des ressorts en caoutchouc.

14. Dispositif selon l'une quelconque des revendications 10 à 13 comportant des bagues de guidage (8, 14, 16) fixées à la carcasse (4) ou à l'armature (5), adaptées pour guider le déplacement de la bobine (1) et coulissant le long du noyau central.

15. Dispositif selon l'une quelconque des revendications précédentes, dans lequel la bobine (1) est au moins partiellement enchâssée dans un matériau plastique comportant des reliefs (9) adaptés pour exercer une précontrainte sur la bobine, lorsque celle-ci est logée dans la carcasse (4), pour limiter les mouvements de la bobine (1) dans la carcasse (4).

16. Dispositif selon l'une quelconque des revendications précédentes, dans lequel un palier de guidage (21) prolonge l'armature (5) selon l'axe de déplacement (Z), adapté pour coopérer avec la carcasse (4) et guider le déplacement le long de l'axe de déplacement (Z), de l'ensemble mobile constitué de la bobine (1) et de la carcasse.

17. Dispositif selon la revendication 16, dans lequel le palier de guidage (21) a un diamètre inférieur à celui de l'armature (5).

**Claims**

1. An active device for damping vibrations of a vibrating element for a motor vehicle, the device comprising an actuator (2) itself comprising:

    · a coil (1) extending circularly in a plane about a displacement axis (Z), and associated with a magnetically permeable yoke (4), and sliding with reciprocating motion along the displacement axis perpendicular to the plane of the coil, a varying electrical current being carried by the coil to generate a magnetic field; and
    · a magnetically permeable armature (5) linked to the vibrating element for which it is desired to damp vibration, by the action of reaction forces against the armature;

    the device being **characterized by** the fact that the displacement of the coil (1) relative to the armature (5) is generated by forces corresponding to magnetic field lines generated by the coil (1), the magnetically permeable yoke (4) comprising a lateral wall (6) which extends, inside the coil (1), substantially parallel to the axis of displacement (Z), whereby said magnetic field lines are concentrated in the armature (5) and in the yoke (4), and directed essentially through an airgap ($\underline{e}$) between the armature (5) and the yoke (4).

2. A device according to claim 1, in which the airgap ($\underline{e}$) consists in a gap between the armature (5) and the yoke (4), that is radial relative to the displacement axis (Z).

3. A device according to either preceding claim, in which the coil (1) is centered on the displacement axis (Z) and the yoke (4) includes an annular cavity (4int) in which the coil is housed, said annular cavity itself including the side wall (6) extending inside the coil, substantially parallel to the displacement axis (Z).

4. A device according to claim 3, in which a portion (6s; 6i) of the side wall (6) presents a shape that is substantially conical, being centered on the displacement axis (Z), while the airgap ($\underline{e}$) corresponding to said portion is substantially constant.

5. A device according to claim 3 or claim 4, in which the yoke (4) comprises a bottom magnetic circuit (4i) and a top magnetic circuit (4s), each substantially in the form of a groove, these grooves being substantially open towards each other so as to form the annular cavity (4int) of the yoke.

6. A device according to claim 5, in which the bottom and top magnetic circuits (4i, 4s) are constituted by two like magnetic circuits disposed one on the other symmetrically about the plane of the coil.

7. A device according to claim 5, in which each of the bottom and top magnetic circuits (4i, 4s) includes a respective rim extending radially outwards and adapted to be engaged by force with the other rim.

8. A device according to claim 6, in which each of the bottom and top magnetic circuits (4i, 4s) includes a respective rim extending radially outwards and adapted to be engaged by force against a peripheral ring (11).

9. A device according to any one of claims 5 to 8, in which the bottom and top magnetic circuits (4i, 4s) are held together by a crimping ring (10).

10. A device according to any preceding claim, in which the armature (5) comprises a magnetically permeable central core which extends along the displacement axis (Z) at the center of the coil (1).

11. A device according to claim 10, in which the yoke (4) comprises a base (18) extending over the central core in a plane perpendicular to the displacement axis, the central core and the base being separated by an axial airgap ($e_a$).

12. A device according to any preceding claim, including suspension means (7) adapted to urge the yoke (4) and the coil (1) to react against the force exerted by the magnetic field along the displacement axis (Z).

13. A device according to claim 12, in which the suspension means (7) are metal springs or rubber springs.

14. A device according to any one of claims 10 to 13, including guide rings (8, 14, 16) secured to the yoke (4) or to the armature (5), adapted to guide displacement of the coil (1), and sliding along the central core.

15. A device according to any preceding claim, in which the coil (1) is engaged at least in part in a plastics material including portions (9) in relief adapted to exert prestress on the coil when the coil is housed in the yoke (4) so as to limit movements of the coil (1) in the yoke (4).

16. A device according to any preceding claim, in which a guide bearing (21) extends the armature (5) along the displacement axis (Z), being adapted to co-operate with the yoke (4) and to guide the displacement along the displacement axis (Z) of the moving assembly constituted by the coil (1) and the yoke.

17. A device according to claim 16, in which the guide bearing (21) is of a diameter smaller than that of the armature (5).

**Patentansprüche**

1. Aktive Vorrichtung zur Dämpfung von Schwingungen eines schwingenden Elementes, für ein Kraftfahrzeug, umfassend einen Aktuator (2), welcher umfasst:

   - eine Spule (1), die sich, um eine Verlagerungsachse (Z), kreisförmig in einer Ebene erstreckt, die einem magnetisch permeablen Gehäuse (4) zugeordnet ist, und die in einer alternativen Bewegung entsprechend der Verlagerungsachse senkrecht zur Ebene der Spule gleitet, wobei ein variabler elektrischer Strom durch die Spule fliesst, um ein Magnetfeld zu erzeugen,
   - und einen magnetisch permeablen Anker (5), der mit dem schwingenden Element verbunden ist, dessen Schwingungen man zu dämpfen wünscht durch Wirkung von Reaktionskräften auf den Anker,

   **dadurch gekennzeichnet, dass** die Verlagerung der Spule (1) in Bezug auf den Anker (5) durch Kräfte erzeugt wird, die Linien des durch die Spule (1) erzeugten Magnetfeldes entsprechen, wobei das magnetisch permeable Gehäuse (4) eine Seitenwand (6) umfasst, die sich, im Inneren der Spule (1), im Wesentlichen parallel zu Verlagerungsachse (Z) erstreckt, wodurch die Magnetfeldlinien in dem Anker (5) und dem Gehäuse (4) konzentriert und im Wesentlichen in einen Luftspalt (e) gelenkt werden, der sich zwischen dem Anker (5) und dem Gehäuse (4) befindet.

2. Vorrichtung gemäß Anspruch 1, wobei der Luftspalt (e) aus einem radialen Raum, in Bezug auf die Verlagerungsachse (Z), zwischen dem Anker (5) und dem Gehäuse (4) besteht.

3. Vorrichtung gemäß einem der vorherigen Ansprüche,
wobei die Spule (1) auf die Verlagerungsachse (Z) zentriert ist und das Gehäuse (4) eine ringförmige Aushöhlung (4int) umfasst, in der die Spule aufgenommen ist, wobei diese ringförmige Aushöhlung selbst die Seitenwand (6) umfasst, die sich, im Inneren der Spule, im Wesentlichen parallel zu der Verlagerungsachse (Z) erstreckt.

4. Vorrichtung gemäß Anspruch 3, wobei ein Teil (6s; 6i) der Seitenwand (6) eine im Wesentlichen konische, auf die Verlagerungsachse (Z) zentrierte Form aufweist, während der Luftspalt (e), der diesem Teil entspricht, im Wesentlichen konstant ist.

5. Vorrichtung gemäß Anspruch 3 oder Anspruch 4, wobei das Gehäuse einen unteren Magnetkreis (4i) und einen oberen Magnetkreis (4s) umfasst, jeder im Wesentlichen in Form einer Rille, wobei diese Rillen zueinander hin im Wesentlichen offen sind, um die ringförmige Aushöhlung des Gehäuses (4int) zu bilden.

6. Vorrichtung gemäß Anspruch 5, wobei der untere (4i) und der obere (4s) Magnetkreis aus zwei gleichen Magnetkreisen gebildet sind, die aufeinander symmetrisch in Bezug auf die Ebene der Spule angeordnet sind.

7. Vorrichtung gemäß Anspruch 5, wobei der untere (4i) und der obere (4s) Magnetkreis jeder jeweils einen Rand umfasst, der sich radial nach außen erstreckt und dazu angepasst ist, mit Kraft gegen den anderen Rand gedrückt zu werden.

8. Vorrichtung gemäß Anspruch 6, wobei der untere (4i) und der obere (4s) Magnetkreis jeder jeweils einen Rand umfasst, der sich radial nach außen erstreckt und dazu angepasst ist, mit Kraft gegen einen Umfangsring (11) gedrückt zu werden.

9. Vorrichtung gemäß einem der Ansprüche 5 bis 8, wobei der untere (4i) und der obere (4s) Magnetkreis dank eines Bördel-Ringes (10) zusammengehalten werden.

10. Vorrichtung gemäß einem der vorherigen Ansprüche, wobei der Anker (5) einen zentralen magnetisch permeablen Kern umfasst, der sich entsprechend der Verlagerungsachse (Z) in der Mitte der Spule (1) erstreckt.

11. Vorrichtung gemäß Anspruch 10, wobei das Gehäuse (4) eine Basis (18) umfasst, die sich oberhalb des zentralen Kerns entsprechend einer Ebene senkrecht zur Verlagerungsachse erstreckt, wobei der zentrale Kern und die Basis durch einen axialen Luftspalt (ea) getrennt sind.

**12.** Vorrichtung gemäß einem der vorherigen Ansprüche, umfassend Aufhängungsmittel (7), die dazu angepasst sind, das Gehäuse (4) und die Spule (1) in Gegenreaktion auf die von dem Magnetfeld entsprechend der Verlagerungsachse (Z) ausgeübten Kraft zu beanspruchen.

**13.** Vorrichtung gemäß Anspruch 12,
wobei die Aufhängungsmittel (7) metallische Federn oder Federn aus Gummi sind.

**14.** Vorrichtung gemäß einem der Ansprüche 10 bis 13, umfassend an dem Gehäuse (4) oder an dem Anker (5) befestigte Führungsringe (8, 14, 16), die angepasst sind, die Verlagerung der Spule (1) zu führen, und die entlang des zentralen Kerns gleiten.

**15.** Vorrichtung gemäß einem der vorherigen Ansprüche,
wobei die Spule (1) wenigstens teilweise in ein Kunststoffmaterial eingebettet ist, welches Vorsprünge (9) umfasst, die angepasst sind, um eine Vorspannung auf die Spule auszuüben, wenn diese sich in dem Gehäuse (4) befindet, um die Bewegungen der Spule (1) im Gehäuse (4) zu begrenzen.

**16.** Vorrichtung gemäß einem der vorherigen Ansprüche,
wobei ein Führungslager (21) den Anker (5) entsprechend der Verlagerungsachse (Z) verlängert und dazu geeignet ist, mit dem Gehäuse (4) zusammen zu wirken und die Verlagerung der beweglichen Gesamtheit, die von der Spule (1) und dem Gehäuse gebildet wird, entlang der Verlagerungsachse (Z) zu führen.

**17.** Vorrichtung gemäß Anspruch 16,
wobei das Führungslager (21) einen Durchmesser hat, der kleiner als derjenige des Ankers (5) ist.

**FIG. 1**

**FIG. 2**

**FIG. 3**

**FIG. 4**

**FIG. 5**

**FIG. 6**

**FIG. 7**

FIG. 8

1

4

18

Z

8

7

5

5'

22

23

FIG. 9

$F_t$    $F_{mag}$

m    Z

k    c

$F_{mag}$

FIG. 10a

$(I=I_n)$

$I=I_1$

6mm

zone d'utilisation

$e_a$

$F_{mag}$

$e_a = 6\,mm$

I

FIG. 10b

$F_t(N)$

80

FIG. 11

30    50

f(Hz)

**RÉFÉRENCES CITÉES DANS LA DESCRIPTION**

**Documents brevets cités dans la description**

- EP 0574574 B1